# EUROPEAN PATENT APPLICATION

(11) **EP 2 838 246 A1**
(43) Date of publication of application: **18.02.2015**
(21) Application number: 13774984.2
(22) Date of filing: 25.03.2013
(51) Int. Cl.: H04M 1/27

(54) **FAST DIALING METHOD AND DEVICE FOR TOUCH SCREEN MOBILE PHONES**

(30) Priority: 10.04.2012 CN 201210103349
(71) Applicant: TENCENT TECHNOLOGY (SHENZHEN) COMPANY LIMITED, Guangdong 518044 (CN)
(72) Inventor: WANG, Qing, Shenzhen Guangdong 518044 (CN); GUO, Haoran, Shenzhen Guangdong 518044 (CN); XIAO, Quanhao, Shenzhen Guangdong 518044 (CN); YUAN, Yixia, Shenzhen Guangdong 518044 (CN); SONG, Jiashun, Shenzhen Guangdong 518044 (CN); LI, Pengtao, Shenzhen Guangdong 518044 (CN); ZHAN, Xunchang, Shenzhen Guangdong 518044 (CN); LIN, Chunyou, Shenzhen Guangdong 518044 (CN)
(74) Representative: Mattsson, Niklas
(86) International application number: PCT/CN2013/073135
(87) International publication number: WO 2013/152665

(57) **Abstract**

The embodiments of this invention provide a speed dial method for a touch screen mobile phone. The touch screen mobile phone uses a lock screen interface and displays a floating window on top of the windows of the lock screen interface. The speed dial method includes real-time monitoring of the lock screen interface and acquisition of a click event. When the click event is a speed dial event, a phone number corresponding to the click event may be acquired at the floating window. Dial the phone number may establish a link between an opposite peer using the phone number and the user. The embodiments of this invention also provide a speed dial device for a touch screen mobile phone. The speed dial device may include: a click event acquisition module, a telephone number acquisition module, and a link establishment module. This invention enables phone calls to be made when the touch screen mobile phone is in a lock screen mode without having to unlock the screen. Phone calls could be made with reduced user operation and at the same time maintain the original function of the lock screen interface, thereby improving the user's phone operation experience.

## Description

This application claims priority to a Chinese Patent Application No. 2012101033499, submitted on April 10, 2012 to the State Intellectual Property Office, entitled "Speed dial method and device for touch screen mobile phone," the entirety of which is incorporated herein by reference.

### Background of the Invention

As smart phone technology advances, endless varieties of touch screen mobile phones emerge. Smart phones have become the mainstream of cell phone development. Compared to the traditional keyboard, touch screen operation is much easier. However, in order to prevent misuse, when not in use, the phone will generally implement a lock screen. The so-called lock screen of a touch-screen phone is used to prevent misuse. It is a full-screen window displayed on the top level of the mobile phone interface and only through correct operation can this window be unlocked to enter the mobile phone interface for other operations. A common example of unlocking a phone is to use a slide motion to unlock the phone. However, this brings up an inconvenience. Before performing any operation, one must first unlock the lock screen. Phone calls are one of the most commonly used features on a phone, but because of the lock screen, users must first unlock the lock screen before making a phone call, thereby increasing the steps of user input.

### Summary of the Invention

In order to enable phone calls when a touch screen mobile phone is on a lock screen mode, embodiments of this invention provide a method for speed dial on the touch screen mobile phone, wherein the touch screen mobile phone uses a lock screen interface;
characterized in that a floating window is displayed on top of the lock screen interface;
wherein the speed dial method includes:
monitoring the lock screen interface in real time to acquire a click event;
if the click event is a speed dial event, acquiring a phone number corresponding to the click event within the floating window; and
dialing the phone number.

The floating window includes:
at least one first floating window that is draggable and a second floating window that is not draggable;
the first floating window is used to display a favorite contact, wherein the favorite contact is used as a speed dial contact when the touch screen mobile phone is in a lock screen mode; and
the second floating window is used to display a dial area, wherein the dial area is an area that confirms that a drag made to the first floating window is for speed dial.

After the click event is acquired, the method further includes:
if the first floating window is touched and dragged to the second floating window, determining that the click event is the speed dial event.

Acquiring the phone number corresponding to the click event includes:
accessing a clicked first floating window corresponding to the click event; and
searching for a default corresponding relationship between the clicked first floating window and a phone number of the favorite contact, accessing the phone number of the favorite contact corresponding to the clicked first floating window, wherein the corresponding phone number of the favorite contact is the phone number corresponding to the click event.

The method further includes:
displaying a favorite contact settings interface to a user;
obtaining at least one favorite contact set by the user;
generating, for every favorite contact obtained, a first floating window displaying the favorite contact on the lock screen interface; and
establishing a corresponding relationship between the first floating window and the phone number of the favorite contact that the first floating window displays.

Prior to the real-time monitoring of the lock screen interface and the acquisition of the click event, the method further includes:
when the touch screen mobile phone is in a standby mode, accessing an instruction signal for speed dial; and
turning on the screen of the touch screen mobile phone to display the lock screen interface according to the instruction signal.
Embodiments of this invention also provide a speed dial device for a touch screen mobile phone, wherein the touch screen mobile phone uses a lock screen interface, wherein a floating window is displayed on top of the lock screen interface;
the speed dial device includes:
   a click event acquisition module, used to monitor the lock screen interface in real time, and acquire a click event;
   a telephone number acquisition module, used to acquire a telephone number of the click event within the floating window when the click event is a speed dial event; and
   a link establishment module, used to dial the telephone number.

The floating window includes:
at least one first floating window that is draggable and a second floating window that is not draggable;
wherein the first floating window is used to display a favorite contact, wherein the favorite contact is used as a speed dial contact when the touch screen mobile phone is in a lock screen mode; and
the second floating window is used to display a dial area;
wherein when the first floating window is dragged, it is confirmed according to the dial area that the drag is for speed dial.

The device further includes:
a speed dial event determination module, used to determine that the click event is the speed dial event when the first floating window is clicked and dragged to the second floating window.

The telephone number acquisition module includes:
a unit for acquiring floating window of click event, used to obtain the first floating window according to a click of the click event; and
a telephone number acquisition unit, used to query a default corresponding relationship between the first floating window with a phone number of the favorite contact, obtain the phone number of the favorite contact corresponding to the clicked first floating window, wherein the corresponding phone number of the favorite contact is a phone number corresponding to the click event.

The device further includes:
a display module, used to display a favorite contact settings interface to a user;
a first floating window generation module, used to obtain at least one favorite contact set by the user, and generate, for every favorite contact obtained, a first floating window displaying the favorite contact on the lock screen interface; and
a corresponding relationship generation module, used to establish the corresponding relationship between the first floating window and the phone number of the favorite contact that the first floating window displays.

The device further includes:
a speed dial instruction signal acquisition module, used to obtain an instruction signal for turning on the speed dial when the touch screen mobile phone is in a standby mode; and
a lock screen interface display module, used to enable the screen of the touch screen mobile phone to turn on according to the instruction signal and show the lock screen interface.

In the embodiments, when a click event for speed dial is monitored, the phone number corresponding to the click event is accessed and dialed via real-time monitoring of the lock screen interface. A link is then established between the user and a terminal device of the phone number, also known as the callee, thus enabling phone calls to be made when the touch screen mobile phone is in lock screen mode, without having to unlock. Phone calls could be made with reduced user operation at the same time maintaining the original function of the lock screen.

### Brief Description of Drawings

In order to more clearly illustrate the embodiments of this invention or the technical schemes of the existing technology, figures used in the embodiments of the invention or the existing technology will be briefly described below. Obviously, the figures described below are some embodiments of this invention. For those skilled in the art, other figures may still be obtained based on these figures without providing any creative and labor effort.
Figure 1 represents a flowchart of a speed dial method for a touch screen mobile phone provided in an embodiment of this invention.
Figure 2 shows a flowchart of a speed dial method for a touch screen mobile phone provided in another embodiment of this invention.
Figure 3 shows a schematic diagram of a lock screen display provided in an embodiment of this invention.
Figure 4 shows a schematic diagram of a lock screen display provided in another embodiment of this invention.
Figure 5 shows a schematic drawing of a speed dial device for a touch screen mobile phone provided in an embodiment of this invention.
Figure 6 shows a schematic drawing of a speed dial device for a touch screen mobile phone provided in another embodiment of this invention.

### Detailed Description of the Invention

For making the purpose, the technical proposal and advantages of embodiments of the invention more clear, the technical proposal of the embodiments of this invention may be described clearly and fully using the figures included. Clearly, the described embodiments are only parts of the embodiments of this invention and not all of the embodiments. Based on the embodiments of this invention, all other embodiments obtained without contributing any creative effect by those skilled in the art are within the scope of protection of this invention.

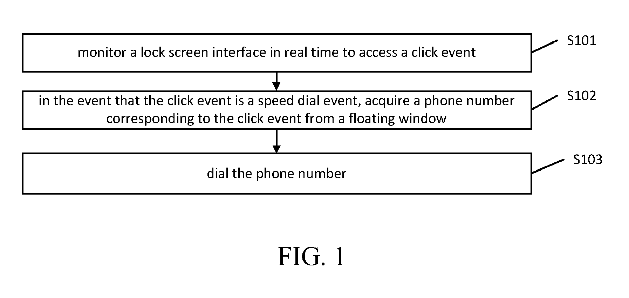

As shown in Figure 1, an embodiment of the invention provides a speed dial method for a touch screen mobile phone. When the touch screen mobile phone is in lock screen mode, a floating window is displayed on the top of a lock screen interface. The speed dial method includes the following steps.

S101: Monitor the lock screen interface in real time to access a click event.

S102: In the event that the click event is a speed dial event, access a phone number corresponding to the click event from the floating window.

S103: Dial the phone number, and allow a user to establish a link to the peer of the telephone number.

Herein, the lock screen interface is a full-screen window displayed on the top of the interfaces of the touch screen mobile phone, used to prevent misuse of the touch screen mobile phone. Only through proper operation can this window be unlocked and allow entrance to other interfaces of the touch screen mobile phone for other operations.

Note that the touch screen mobile phone described in the embodiment of the invention also refers to other touch screen devices such as a tablet PC, personal digital assistant (PDA), etc. The speed dial method can be used by the other touch screen devices. Therefore, any improvements formed based on the methods described in the embodiments of the invention are within the protection of this invention and may not be mentioned again here on.

In embodiments of this invention, the lock screen is monitored in real time. If a click event detected is a speed dial event, then access a telephone number corresponding to the click event, and dial the telephone number allowing the user to establish a link with the peer of the telephone number. Thus, phone calls could be made when the touch screen mobile phone is in lock screen mode, without having to unlock the screen. That is, phone calls could be made with reduced user operation at the same time maintaining the original function of the lock screen; hence, improving user experience on phone operation.

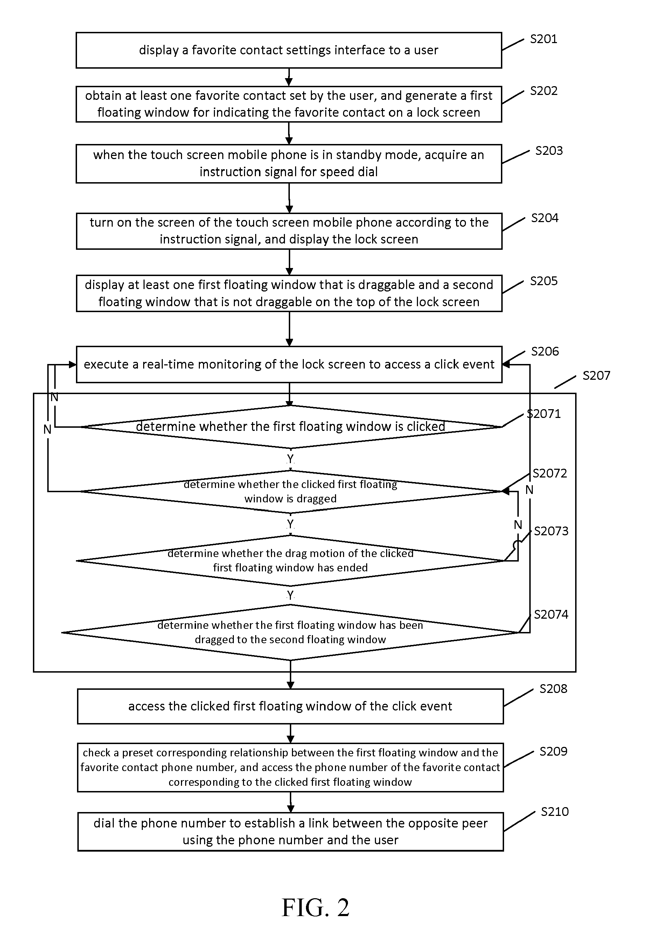

As shown in Figure 2, an embodiment of this invention provides another speed dial method for a touch screen mobile phone. When the touch screen mobile phone uses a lock screen, the speed dial method includes:

S201: Display a favorite contact settings interface to a user.

Herein, favorite contacts are used as the contacts for speed dial when the touch screen mobile phone is in lock screen.

In this embodiment, the favorite contact settings interface could be displayed to the user through a separate form of software interface. For example, the software interface, including a user's contact list, is used for displaying contact names and phone numbers. A check box, placed after each contact, allows the user to confirm and make a contact a favorite contact through touching the check box.

As an additional option, the favorite contact settings interface could also be added into the detailed information of each contact contained in the contact list. This allows the user to decide whether or not to set a contact as a favorite contact when the user is accessing the detailed information of the contact.

S202: Obtain at least one favorite contact set by the user, and generate a first floating window for indicating the favorite contact on the lock screen.

In this embodiment, when the user selects a favorite contact through the displayed favorite contact settings interface in S201, a floating window is generated on the lock screen. Such is the first floating window and is used to display the favorite contact. Optionally, such floating window can be used to display the name of the favorite contact and/or a specific photo of the favorite contact set by the user. After the user sets a favorite contact, a following step is to speed dial on the lock screen.

Alternatively, the aforementioned favorite contact could also be set through other methods such as making a recent contact in the call log into a favorite contact. Also, based on the frequency of different numbers dialed in a given time, the most frequently dialed number is set as a favorite contact. There are other methods for setting a favorite contact; however, they may not be further addressed herein.

Meanwhile, when at least one favorite contact is set by the user, a corresponding relationship between the first floating window and the corresponding favorite contact phone number is set by default. The corresponding relationship also includes favorite contact information corresponding to the first floating window. The corresponding relationship is shown in Table 1.

**Table 1**

| Favorite contact | First floating window | Favorite contact's phone number |
|---|---|---|
| A | First floating window A | 123 |
| B | First floating window B | 456 |
| C | First floating window C | 789 |

S203: When the touch screen mobile phone is in standby mode, an instruction signal for speed dial is acquired.

Herein, during standby mode, the screen of the touch screen mobile phone is off. The instruction signal may be used to indicate that the speed dial function on the touch screen mobile phone is turned on.

Alternatively, the instruction signal can be an electrical signal sent out via a push of a specific hotkey. The specific hotkey can be the on/off key of the mobile phone or other function keys.

S204: Turn on the screen of the touch screen mobile phone by using the instruction signal, and display the lock screen interface.

For example, when an electrical signal, generated when the on/off key of the touch screen mobile phone is pushed, is received, according to the electrical signal, the screen of the touch screen mobile phone will light up and display the lock screen interface.

S205: Display at least one first floating window that is draggable and a second floating window that is not draggable on the top of the lock screen.

Herein, a first floating window is used to display a favorite contact. The favorite contact is used as a speed dial contact when the touch screen mobile phone is in lock screen mode. The second floating window is used to display a dial area. The dial area is an area that helps to confirm that the drag made to the first floating window is for speed dial.

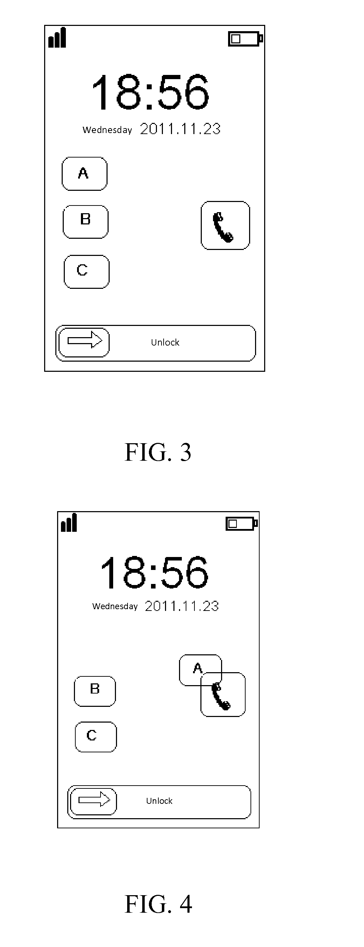

For example, Figure 3 shows the lock screen of a touch screen mobile phone, floating windows marked as A, B, and C are first floating windows. A, B, and C indicate the names of the favorite contacts set by the user. The icon located on the right side of the lock screen is the second floating window, shown as a simple telephone icon.

S206: Execute a real-time monitoring of the lock screen to access a click event.

In this step, real-time monitoring of click events of the lock screen interface, shown in Figure 3, takes place through the backend of the touch screen mobile phone to obtain possible click events. In terms of a click event, any location on the lock screen interface can be clicked to trigger the click event. For example, when floating window A, as shown in Figure 3, is clicked, the click event that follows is named DA. When the floating window of a right arrow icon is clicked, the click event that follows is called DX.

S207: If the first floating window is clicked and dragged to the second floating window, then the click event is confirmed as a speed dial event.

Specifically, S207 can additionally include the following steps.

S2071: Determine whether the first floating window is clicked. If yes, start S2072; if not, then return to S206.

Specifically, in this step, through determining whether the click event accessed from S206 is triggered by clicking of the first floating window, it is further determined whether the first floating window has been clicked.

For example, as shown in the lock screen interface in Figure 3, if the click event is DA, it is determined that the first floating screen is clicked, and then S2072 is executed. If the click event is DX, then there may be no response to the click event and the method may return to S206, that is, real-time monitoring the lock screen interface and access of click events will be continued.

S2072: Determine whether the clicked first floating window is dragged. If yes, execute S2073; if not, return to S206.

For example, as shown in step S2071, when first floating window A is clicked, this step serves to further determine whether the first floating window is moved. If yes, then S2073 is executed; if not, then return to S206 to continue real-time monitoring of the lock screen interface to acquire a click event.

Note that the motion described in this step means a continuous motion as a result of dragging the first floating window.

S2073: Determine whether the drag motion of the clicked first floating window has ended. If yes, execute S2074; if not, return to S2072.

For example, in step S2072, when first floating window A is dragged and the drag action has ended, execute S2074; if the first floating window is still being dragged, then execute S2072.

It should be noted that, in this embodiment, in order to clearly describe dragging of the first floating window as being dragged from initiation until the drag ends, such action is divided into two steps, S2072 and S2073. However, since dragging and drag ending of the first floating window is a continuous motion, S2072 and S2073 can be replaced by a single continuous determination step. Therefore, other methods used to determine whether the first floating window has continuously been dragged and until the drag ends are within the scope of this invention and may not be addressed again hereon.

S2074: Determine whether the first floating window has been dragged to the second floating window. If yes, then a click event, DA, is confirmed as a speed dial event and S208 is executed. If not, then the first floating window may return to the original place on the lock screen, and the method returns to S206.

For example, as shown in Figure 4, when first floating window A has been dragged to the second floating window, which is shown as a simple phone icon on the right side of the lock screen, S208 is executed. If not, then the first floating window may return to its original location on the lock screen, and the method may proceed to S206 to continue real-time monitoring of the lock screen interface and acquire click events.

Specifically, whether or not the first floating window has been dragged to the second floating window is determined by the area of overlap between the first floating window and the second floating window. When the area of overlap between the first floating window and the second floating window is greater than or equal to a default value, it is then determined that the first floating window has been dragged to the second floating window. This default value can be a preferred value derived from experimental statistics.

S208: Access the clicked first floating window of the click event.

For example, if the click event is DA, then the corresponding first floating window is first floating window A.

S209: Check the preset corresponding relationship between the first floating window and the favorite contact phone number, and access the phone number of the favorite contact corresponding to the clicked first floating window.

Herein, the corresponding phone number of the favorite contact is the phone number corresponding to the click event.

For example, when floating window A is confirmed to have been clicked, a click event DA generated by the clicking is a speed dial event. By checking the corresponding relationship Table 1, one can see that the corresponding favorite contact's phone number for first floating window A is "123".

S210: Dial the phone number to establish a link between the opposite peer using the phone number and the user.

For example, in S208, when first floating window A is dragged to the second floating window, access the phone number "123" for favorite contact A, and dial the phone number to establish a link between the opposite peer using the phone number and the user.

In the embodiment of the invention, when the monitored click event is a speed dial event, the phone number corresponding to the click event is retrieved and the phone number is dialed, thereby establishing a link between the opposite peer using the phone number and the user, thus enabling phone calls to be made when the touch screen mobile phone is in lock screen mode without having to unlock the screen through real-time monitoring of the lock screen interface. Phone calls could be made with reduced user operation and at the same time the original function of the lock screen can be maintained, thereby improving the user's phone operation experience.

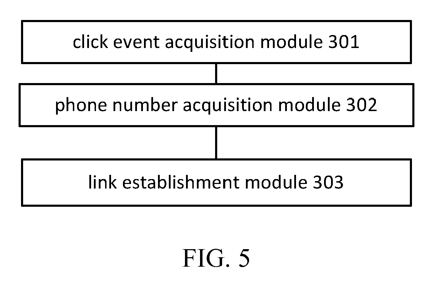

As shown in Figure 5, an embodiment of the invention also provides a speed dial device for a touch screen mobile phone. The touch screen mobile phone uses a lock screen interface and displays floating windows on top of the windows of the lock screen interface. Such speed dial device includes: a click event acquisition module 301, a phone number acquisition module 302, and a link establishment module 303.

The click event acquisition module 301 is used for real-time monitoring of the lock screen interface and acquisition of a click event.

The phone number acquisition module 302 is used to access a phone number corresponding to the click event at a floating window, when the click event is a speed dial event.

The link establishment module 303 is used to dial the phone number.

Note that the touch screen mobile phone described in the embodiment of this invention can also be referring to other touch screen devices, such as a tablet PC, PDA, etc.

In the embodiment of the invention, through real-time monitoring of the lock screen interface, when the monitored click event is a speed dial event, the phone number corresponding to the click event is retrieved and dialed, thereby establishing a link between the opposite peer using the phone number and the user. This thus enables phone calls to be made when the touch screen mobile phone is in lock screen mode without having to unlock the screen. Phone calls could be made with reduced user operation and at the same time maintain the original function of the lock screen, thereby improving the user's phone operation experience.

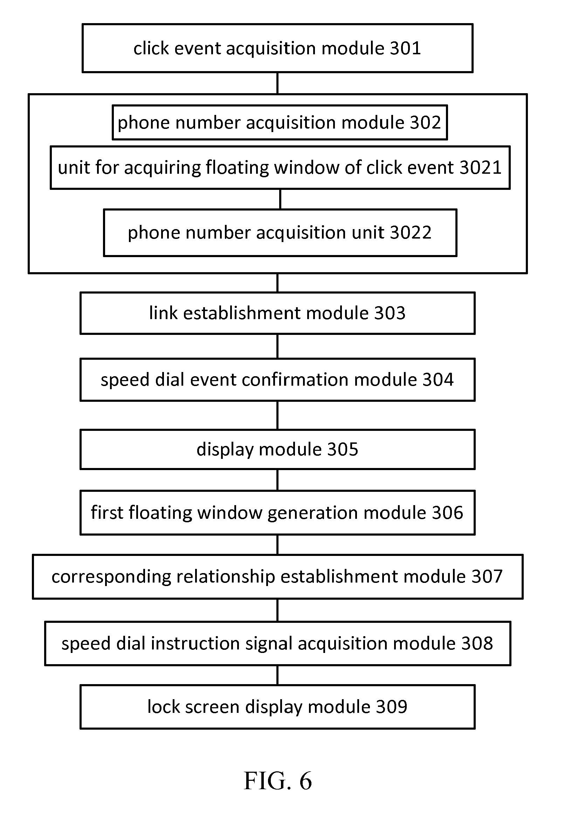

As shown in Figure 6, an embodiment of the invention also provides a speed dial device for a touch screen mobile phone. The touch screen mobile phone uses a lock screen interface. The embodiment includes the click event acquisition module 301, the phone number acquisition module 302, and the link establishment module 303 described in prior embodiments.

Specifically, the phone number acquisition module 302 may further include:
a unit for acquiring floating window of click event 3021, used to access the clicked first floating window corresponding to the click event; and
a phone number acquisition unit 3022, used to check the default corresponding relationship between the favorite contact's phone number and the first floating window, and access the favorite contact's phone number corresponding to the clicked first floating window.

The aforementioned corresponding favorite contact's phone number is a phone number corresponding to the click event.

The floating window may include: a first floating window and an undraggable second floating window. The first floating window is used to display a favorite contact. The favorite contact is then used as a speed dial contact when the touch screen mobile phone is in lock screen mode. The second floating window is used to display a dial area. The dial area is used to determine whether the drag made to the first floating window is for speed dial.

Furthermore, the device also includes: a speed dial event confirmation module 304, used to confirm that the click event is a speed dial event when at least one of the first floating windows has been clicked and dragged to the second floating window.

Alternatively, the speed dial event confirmation module 304 can specifically first, determine whether the first floating window has been clicked. If the first floating window is clicked, continue to determine whether the clicked first floating window is being dragged. When the clicked first floating window is being dragged, continue to determine if the drag for the clicked first floating window has been finished. When the drag for the clicked first floating window has been finished, continue to determine if the first floating window is being dragged to the second floating window. Finally, if the first floating window is being dragged to the second floating window, the click event DA is then a speed dial event.

Furthermore, the device also includes the following modules.

A display module 305 is used to display a favorite contact settings interface to a user.

A first floating window generation module 306 is used to access at least one favorite contact set by the user, then generate the first floating window for displaying the favorite contact on the lock screen interface.

A corresponding relationship establishment module 307 is used for establishing a corresponding relationship between the first floating window and its corresponding favorite contact's phone number.

Furthermore, such device can also include:
a speed dial instruction signal acquisition module 308, used to acquire an instruction signal for starting speed dial when the touch screen mobile phone is in lock screen mode.
a lock screen display module 309, used according to the instruction signal to turn on the screen of the touch screen mobile phone and display the lock screen interface.

In the embodiments of the invention, through real-time monitoring of the lock screen interface, when the monitored click event is a speed dial event, the phone number corresponding to the click event is retrieved and the phone number is dialed, thereby establishing a link between the opposite peer using the phone number and the user. This thus enables phone calls to be made when the touch screen mobile phone is in lock screen mode without having to unlock the screen. Phone calls could be made with reduced user operation and at the same time maintain the original function of the lock screen, thereby improving the user's phone operation experience.

Those skilled in the art can understand that: complete or partial steps of the method mentioned in the above embodiments can be achieved through related hardware instructed by a program. The previously mentioned program can be stored in a computer readable storage medium. When executing the program, the steps from the previously described method in the embodiments may also be executed. The storage medium mentioned above includes: ROM, RAM, hard drive, optical disc, or any kind of medium that can store program codes.

Finally, it should be noted that, the above embodiments are used only to describe a technical proposal of this invention and not to limit it. Although the above mentioned embodiments describe the invention in detail, those skilled in the art should understand that: one can still make modifications to the technical proposal described in the various embodiments mentioned above or substitute parts of the technical characteristics, but these modifications or substitutions do not make such technical proposal depart from the span and scope of the technical proposal described in the various embodiments of this invention.

## Claims

1. A speed dial method for a touch screen mobile phone, wherein the touch screen mobile phone uses a lock screen interface;
**characterized in that** a floating window is displayed on top of the lock screen interface;
wherein the speed dial method comprises:
monitoring the lock screen interface in real time to acquire a click event;
if the click event is a speed dial event, acquiring a phone number corresponding to the click event within the floating window; and
dialing the phone number.

2. The method according to claim 1, wherein the floating window comprises:
at least one first floating window that is draggable and a second floating window that is not draggable;
the first floating window is used to display a favorite contact, wherein the favorite contact is used as a speed dial contact when the touch screen mobile phone is in a lock screen mode; and
the second floating window is used to display a dial area, wherein the dial area is an area that confirms that a drag made to the first floating window is for speed dial.

3. The method according to claim 2, wherein, after the click event is acquired, the method further comprises:
if the first floating window is touched and dragged to the second floating window, determining that the click event is the speed dial event.

4. The method according to claim 2, wherein acquiring the phone number corresponding to the click event comprises:
accessing a clicked first floating window corresponding to the click event; and
searching for a default corresponding relationship between the clicked first floating window and a phone number of the favorite contact, accessing the phone number of the favorite contact corresponding to the clicked first floating window, wherein the corresponding phone number of the favorite contact is the phone number corresponding to the click event.

5. The method according to claim 2, further comprising:
displaying a favorite contact settings interface to a user;
obtaining at least one favorite contact set by the user;
generating, for every favorite contact obtained, a first floating window displaying the favorite contact on the lock screen interface; and
establishing a corresponding relationship between the first floating window and the phone number of the favorite contact that the first floating window displays.

6. The method according to any of claims 1 to 5, wherein, prior to the real-time monitoring of the lock screen interface and the acquisition of the click event, the method further comprises:
when the touch screen mobile phone is in a standby mode, accessing an instruction signal for speed dial; and
turning on the screen of the touch screen mobile phone to display the lock screen interface according to the instruction signal.

7. A speed dial device for a touch screen mobile phone, wherein the touch screen mobile phone uses a lock screen interface, wherein a floating window is displayed on top of the lock screen interface;
the speed dial device comprises:
a click event acquisition module, used to monitor the lock screen interface in real time, and acquire a click event;
a telephone number acquisition module, used to acquire a telephone number of the click event within the floating window when the click event is a speed dial event; and
a link establishment module, used to dial the telephone number.

8. The device according to claim 7, wherein the floating window comprises:
at least one first floating window that is draggable and a second floating window that is not draggable;
wherein the first floating window is used to display a favorite contact, wherein the favorite contact is used as a speed dial contact when the touch screen mobile phone is in a lock screen mode; and
the second floating window is used to display a dial area;
wherein when the first floating window is dragged, it is confirmed according to the dial area that the drag is for speed dial.

9. The device according to claim 8, further comprising:
a speed dial event determination module, used to determine that the click event is the speed dial event when the first floating window is clicked and dragged to the second floating window.

10. The device according to claim 8, wherein the telephone number acquisition module comprises:
a unit for acquiring floating window of click event, used to obtain the first floating window according to a click of the click event; and
a telephone number acquisition unit, used to query a default corresponding relationship between the first floating window with a phone number of the favorite contact, obtain the phone number of the favorite contact corresponding to the clicked first floating window, wherein the corresponding phone number of the favorite contact is a phone number corresponding to the click event.

11. The device according to claim 8, further comprising:
a display module, used to display a favorite contact settings interface to a user;
a first floating window generation module, used to obtain at least one favorite contact set by the user, and generate, for every favorite contact obtained, a first floating window displaying the favorite contact on the lock screen interface; and
a corresponding relationship generation module, used to establish the corresponding relationship between the first floating window and the phone number of the favorite contact that the first floating window displays.

12. The device according to any of claims 7 to 11, further comprising:
a speed dial instruction signal acquisition module, used to obtain an instruction signal for turning on the speed dial when the touch screen mobile phone is in a standby mode; and
a lock screen interface display module, used to enable the screen of the touch screen mobile phone to turn on according to the instruction signal and show the lock screen interface.
